# EUROPÄISCHE PATENTANMELDUNG

(11) **EP 2 743 389 A1**
(43) Veröffentlichungstag der Anmeldung: **18.06.2014**
(21) Anmeldenummer: 13194410.0
(22) Anmeldetag: 26.11.2013
(51) Int. Cl.: D04H 1/54, A47L 11/162, A47L 11/40, A47L 13/16

(54) **Genopptes Schleif- und Reinigungsvlies**

(30) Priorität: 12.12.2012 DE 102012222886
(71) Anmelder: Jöst GmbH, 69483 Wald-Michelbach (DE)
(72) Erfinder: Jöst, Peter, 69518 Abtsteinach (DE); Jöst, Christian, 69518 Abtsteinach (DE)
(74) Vertreter: Hess, Peter K. G.

(57) **Zusammenfassung**

Die vorliegende Erfindung betrifft ein Schleif- und Reinigungsvlies 1 zum maschinellen Schleifen und maschinellen Reinigen von strukturierten Oberflächen, umfassend einen Vlieskörper 10, der eine Bearbeitungsoberfläche 11 mit einer Vielzahl von Noppen 14 aufweist. Weiterhin betrifft die Erfindung ein entsprechendes Herstellungsverfahren und eine Verwendung eines Schleif- und Reinigungsvlieses 1.

## Beschreibung

### 1. Gebiet der Erfindung

Die Erfindung betrifft ein genopptes Schleif- und Reinigungsvlies, zur maschinellen Bearbeitung von strukturierten Oberflächen, insbesondere strukturierten Bodenbelägen. Insbesondere kann ein derartiges Schleif- und Reinigungsvlies zur Reinigung von schwer zu pflegenden Kunststoff-Bodenbelägen mit strukturierten Oberflächen verwendet werden.

### 2. Stand der Technik

Bodenbeläge mit strukturierten Oberflächen werden in vielen Bereichen eingesetzt, zum Beispiel im Gesundheitswesen, in der Industrie und im Gewerbe, in Flughäfen, in Büro- und Verwaltungsgebäuden sowie in Wohnbauten. Neben Bodenbelägen mit einer planen Oberfläche sind solche mit einer ausgeprägten Oberflächenstruktur erhältlich. Diese Oberflächenstruktur lässt die Bodenbeläge natürlicher erscheinen und verringert die Rutschgefahr. Zum Beispiel sind Kunststoff-Bodenbeläge mit einer Schieferstruktur, einer Holzstruktur, einer Hammerschlagoberfläche oder mit Rundnoppen bekannt. Die Strukturierung kann einige Millimeter Höhe aufweisen.

Ein gründliches Reinigen solcher Beläge stellt ein großes, bis jetzt noch nicht optimal gelöstes Problem dar. Bekannte Reinigungsprodukte und Systeme, wie zum Beispiel Bürstmaschinen mit Bürstwalzen oder Einscheibenmaschinen, Triomaschinen oder Reinigungsautomaten, welche plane Reinigungspads verwenden, erreichen tiefere Stellen der profilierten Oberfläche nicht, sodass eine gründliche Reinigung der gesamten Oberfläche nicht möglich ist. Insbesondere kann Schmutz aus tieferen Stellen der profilierten Oberfläche nicht entfernt werden, da die Reinigungsmittel nur die erhabenen Stellen der strukturierten Oberfläche des Bodenbelags erreichen. Weiche Bürstwalzen erreichen zwar die tieferen Stellen der Oberflächenstruktur des Bodens, ihre Reinigungswirkung ist jedoch sehr gering.

Weiterhin sind Topf- und Geschirrreinigungsschwämme bekannt, die eine nachgiebige, profilierte Oberfläche aufweisen. Diese Topf- und Geschirrreinigungsschwämme werden zur manuellen Geschirrreinigung verwendet und sind prinzipbedingt nicht zur maschinellen Bodenreinigung geeignet.

Außerdem sind Polierschwämme mit einer nachgiebigen, profilierten Oberfläche bekannt, die zusammen mit flüssigen Poliermitteln zur Politur von KFZ-Lackoberflächen verwendet werden. Die Polierschwämme dürfen jedoch selbst keine Reinigungs- oder Schleifwirkung haben, um die Lackoberfläche nicht zu beschädigen.

Des Weiteren sind plane Vliesreinigungsscheiben bzw. *"Floor Pads"* bekannt, welche zusammen mit den oben genannten Einscheiben- und Triomaschinen zur Bearbeitung von Fußböden verwendet werden. Diese sind in der Regel kreisförmig und je nach Aufgabenstellung in vielen verschiedenen Ausführungsformen verfügbar, zum Beispiel für Polier-, Reinigungs-, Schrubb-, Staubwisch-, Schmutzwasseraufnahme- oder Bodenfinishing-Anwendungen. Diese planen Vliesreinigungsscheiben sind jedoch nur für die Bearbeitung glatter Böden geeignet, da sie durch ihre planen Oberfläche ebenfalls nicht in die Vertiefungen strukturierter Bodenbeläge eindringen können. Folglich werden mit solchen Vliesreinigungsscheiben nur die erhabenen Bereiche strukturierter Bodenbeläge gereinigt, während der Schmutz in den Vertiefungen verbleibt.

Aus der EP 2 353 484 B1 derselben Anmelderin sind Schleif- und Reinigungskörper bekannt, die einen profilierten Grundkörper aus einem Schaumstoffmaterial aufweisen, auf den eine Bearbeitungsschicht aus Kunstharz aufgebracht ist. Diese Schleif- und Reinigungskörper sind zwar grundsätzlich zur Reinigung von strukturierten Oberflächen geeignet, ihre Standzeit ist jedoch vergleichsweise gering, insbesondere, wenn Reinigungsmittel mit einem hohen Lösemittelanteil verwendet werden. Diese Reinigungsmittel können so aggressiv sein, dass sie Bindeharze, mit denen Schleifkorn an das Schaummaterial gebunden ist auflösen, oder sogar das Schaummaterial des Schleif- und Reinigungskörper selbst.

Die vorliegende Erfindung stellt sich daher der Aufgabe, einen Schleif- und Reinigungskörper zur effektiven maschinellen Reinigung von strukturierten Oberflächen, insbesondere Bodenbelägen bereitzustellen.

### 3. Zusammenfassung der Erfindung

Die oben genannte Aufgabe wird gelöst durch ein Schleif- und Reinigungsvlies gemäß Patentanspruch 1, ein Verfahren zur Herstellung eines Schleif- und Reinigungsvlieses gemäß Patentanspruch 14 sowie ein Verfahren zur Verwendung eines Schleif- und Reinigungsvlieses gemäß Patentanspruch 17.

Insbesondere wird die Aufgabe gelöst durch ein Schleif- und Reinigungsvlies zum maschinellen Schleifen und maschinellen Reinigen von strukturierten Oberflächen, umfassend einen Vlieskörper, der eine Bearbeitungsoberfläche mit einer Vielzahl von Noppen aufweist.

Dadurch, dass der Vlieskörper eine Bearbeitungsoberfläche mit einer Vielzahl von Noppen aufweist, kann die zur Reinigung vorgesehene Bearbeitungsoberfläche gut auch tiefere Stellen der strukturierten Oberfläche, beispielsweise eines Bodenbelags erreichen. Dabei werden beim Schleifen oder Reinigen die Noppen des nachgiebigen Vlieskörpers in die Vertiefungen der Oberflächenstruktur des Bodenbelags gedrückt, sodass die Noppen auch diese tiefen Stellen an ihrem Grund reinigen oder beschleifen können. Damit lassen sich auch stark strukturierte Böden, wie beispielsweise Kunststoff-Noppenböden vollständig reinigen, was mit herkömmlichen planen Bodenpads nicht möglich ist.

Dabei haben erfindungsgemäße Schleif- und Reinigungsvliese aufgrund der aus dem robusten Vliesmaterial selbst bestehenden nachgiebigen Noppen eine Standzeit, die üblichen Bodenpads entspricht. Die erfindungsgemäßen Schleif-und Reinigungsvliese können durch ihre Faservliesstruktur, Faserstärke, Schleifkorngröße, Bindeharze, Dicke und Noppenform an die jeweiligen Anforderungen angepasst werden.

Bevorzugt sind die Noppen der genoppten Bearbeitungsoberfläche integrale Bestandteile des Vlieskörpers. Die Noppen sind direkt aus dem Vlieskörper gebildet. Das bedeutet, dass die Noppen nicht in irgendeiner Form aufgesetzt oder aufgeklebt sind, sondern direkt aus dem Vlieskörper selbst bestehen. Hiermit wird gewährleistet, dass sich die Noppen nicht vom Vlieskörper ablösen können. Die Verwendung von Klebstoffen zur Befestigung der Noppen kann somit vermieden werden, was sowohl Kosten bei der Herstellung einspart als auch die Umwelt schont. Diese integrale Ausgestaltung der Noppen im Vlieskörper erhöht auch die Lebensdauer des Schleif- und Reinigungsvlieses, da nun auch aggressive Reinigungsmittel die Noppen nicht ablösen oder zerstören können.

Bevorzugt weisen die Noppen der genoppten Bearbeitungsoberfläche eine geringere Dichte auf, als die anderen Bereiche des Vlieskörpers. Durch die geringere Dichte der Noppen wird erreicht, dass diese nachgiebig sind und sich der zu bearbeitenden strukturierten Oberfläche optimal anpassen können. Somit werden Erhebungen der strukturierten Oberfläche genauso intensiv bearbeitet wie deren Täler, was ein gleichmäßiges Schleif- und/oder Reinigungsbild auf der zu bearbeitenden Oberfläche erzeugt.

Bevorzugt weist der Vlieskörper eine ebene Befestigungsoberfläche auf, die der genoppten Bearbeitungsoberfläche gegenüberliegt. Mit dieser ebenen Befestigungsoberfläche wird der Schleif- und Reinigungskörper mit einer Schleif- und/oder Reinigungsmaschine großflächig verbunden. Durch diese Verbindung werden die rotatorischen oder oszillatorischen Bewegungen der Reinigungs- oder Schleifmaschine schlupffrei auf das Schleif- und Reinigungsvlies übertragen.

Bevorzugt weist die genoppte Bearbeitungsoberfläche des Schleif- und Reinigungsvlieses Schleifpartikel auf, die mit einem Bindeharz an der Bearbeitungsoberfläche des Schleif- und Reinigungsvlieses befestigt sind. Zur Erhöhung der Schleif- und Reinigungswirkung können an der Bearbeitungsoberfläche Schleifpartikel angeklebt sein. Durch die Auswahl des Schleifpartikelmaterials und der Schleifpartikelgröße kann das Schleif- und Reinigungsvlies an eine Vielzahl von unterschiedlichen Schleif- oder Reinigungsaufgaben angepasst werden. Dies ermöglicht es dem Anwender aus einer breiteren Produktpalette exakt das Schleif- und Reinigungsvlies auszuwählen, welches optimal an die speziellen Gegebenheiten der jeweiligen Reinigungs- oder Schleifaufgabe angepasst ist.

Durch ein geeignetes Bindeharz, wie zum Beispiel Bindeharze auf Polyurethan- oder Latex-Basis, ist es möglich, die Schleifpartikel dergestalt mit der Bearbeitungsoberfläche des Vlieskörpers zu verbinden, dass die Schleifpartikel auch beim Kontakt mit aggressiven Reinigungsmitteln an der Bearbeitungsoberfläche verbleiben und sich nicht ablösen. Somit kann die Standzeit des Schleif- und Reinigungsvlieses signifikant erhöht und das Schleif- oder Reinigungsergebnis verbessert werden. Das Bindeharz kann weiterhin so gewählt werden, dass der Vlieskörper relativ steif oder nachgiebig wird, um sich den Oberflächenstrukturen besser anpassen zu können.

Bevorzugt besteht das Schleif- und Reinigungsvlies ausschließlich aus dem Vlieskörper. In einer weiteren Ausführungsform besteht das Schleif- und Reinigungsvlies aus dem Vlieskörper und einer Klettadaptionsschicht, wobei die Klettadaptionsschicht an der Befestigungsoberfläche des Vlieskörpers angeordnet ist. In einer anderen Ausführungsform besteht das Schleif- und Reinigungsvlies aus dem Vlieskörper sowie einem Schaumkörper, wobei der Schaumkörper an der Befestigungsoberfläche des Vlieskörpers angeordnet ist. In einer weiteren Ausführungsform besteht das Schleif- und Reinigungsvlies aus dem Vlieskörper, einem Schaumkörper und einer Klettadaptionsschicht, wobei der Schaumkörper an der Befestigungsoberfläche des Vlieskörpers angeordnet ist und die Klettadaptionsschicht auf einer Oberfläche des Schaumkörpers angeordnet ist, welche derjenigen Oberfläche des Schaumkörpers entgegengesetzt ist, an welcher der Vlieskörper angeordnet ist. In einer weiteren Ausführungsform besteht das Schleif- und Reinigungsvlies aus dem Vlieskörper, einem Schaumkörper und einem zweiten Vlieskörper, wobei der Schaumkörper an der Befestigungsoberfläche des Vlieskörpers angeordnet ist und der zweite Vlieskörper auf einer Oberfläche des Schaumkörpers angeordnet ist, welche derjenigen Oberfläche des Schaumkörpers entgegengesetzt ist, an welcher der Vlieskörper angeordnet ist. Für den Fall, dass das Schleif- und Reinigungsvlies ausschließlich aus dem Vlieskörper besteht weist er keine weiteren Schichten auf. Dann wird die Verbindung zwischen dem Schleif- und Reinigungsvlies mit der Schleif- und/oder Reinigungsmaschine bevorzugt über einen Reibschluss erzeugt, indem beispielsweise der Bürstenteller einer Scheiben-Bodenreinigungsmaschine auf den Vlieskörper aufgesetzt wird. Für den anderen Fall, dass das Schleif- und Reinigungsvlies aus dem Vlieskörper und einer Klettadaptionsschicht besteht, kann das Schleif- und Reinigungsvlies leicht und sicher über eine Klettschicht an einem Teller der Schleif- und/oder Reinigungsmaschine befestigt werden. Hiermit können auch vertikale, strukturierte Oberflächen bearbeitet werden.

Für den Fall, dass das Schleif- und Reinigungsvlies aus dem Vlieskörper und dem Schaumkörper besteht, kann das Schleif- und Reinigungsvlies durch die Höhe des Schaumkörpers und/oder die Festigkeit des Schaumkörpers und/oder das Material des Schaumkörpers an die zu lösende Schleif- und/oder Reinigungsaufgabe angepasst werden. Dies hat den Vorteil, dass sich eigentlich widersprechende Materialanforderungen nach Festigkeit einerseits und Nachgiebigkeit andererseits entkoppelt werden können. Die Festigkeit des Schleif- und Reinigungsvlieses für eine ausreichende Schleif- und/oder Reinigungswirkung und hohe Standzeit wird in erster Linie vom Vlieskörper bestimmt, während die Nachgiebigkeit, um auch Vertiefungen eines Bodenbelags gründlich zu reinigen, in erster Linie vom Schaumkörper bestimmt wird. Dies eröffnet weitere Möglichkeiten der Materialauswahl für das Schleif- und Reinigungsvlies. Diese Möglichkeiten führen durch die Auswahl günstigerer Materialien zu reduzierten Produktionskosten und/oder gestatten es, das Schleif- und Reinigungsvlies noch besser an die zu lösende Schleif- und/oder Reinigungsaufgabe anzupassen. Weiterhin wird die Lebensdauer des Schleif- und Reinigungsvlieses erhöht, da durch den Schaumkörper sich der Druck auf den Vlieskörper gleichmäßig verteilt und dadurch die Noppen länger in Form bleiben.

Desweiteren besteht das Schleif- und Reinigungsvlies in einer bevorzugten Ausführungsform aus dem Vlieskörper, dem Schaumkörper und einer Klettadaptionsschicht. Wie oben bereits dargelegt, kann das Schleif- und Reinigungsvlies über eine Klettschicht leicht und sicher an einem Teller mit Kletthaftschicht der Schleif- und/oder Reinigungsmaschine befestigt werden, sodass auch vertikale, strukturierte Oberflächen bearbeitet werden können.

In einer weiteren bevorzugten Ausführungsform besteht das Schleif- und Reinigungsvlies aus dem Vlieskörper, dem Schaumkörper und einem zweiten Vlieskörper. Der zweite Vlieskörper weist bevorzugt eine Bearbeitungsoberfläche mit einer Vielzahl von Noppen auf. Der Vlieskörper und der zweite Vlieskörper weisen in einer bevorzugten Ausführungsform dieselben Reinigungseigenschaften auf. Dies hat den Vorteil, dass die ohnehin bereits deutlich erhöhte Lebensdauer des Schleif- und Reinigungsvlieses verdoppelt wird. Nachdem der Vlieskörper das Ende seiner Lebensdauer erreicht hat, muss das Schleif- und Reinigungsvlies nur gewendet werden, um mit dem zweiten Vlieskörper weiterzureinigen. Ein Austausch des Schleif- und Reinigungsvlieses ist erst erforderlich, wenn auch der zweite Vlieskörper das Ende seiner Lebensdauer erreicht hat. Folglich kann die Vorratshaltung an Ersatz-Schleif- und -Reinigungsvliesen reduziert und die Handhabung von Schleif- und Reinigungsmaschinen verbessert werden.

In einer alternativen Ausführungsform weisen der Vlieskörper und der zweite Vlieskörper unterschiedliche Reinigungswirkungen auf. Diese Ausführungsform ist besonders dann bevorzugt, wenn in einem Reinigungsvorgang unterschiedliche Oberflächen bearbeitet werden sollen oder wenn die zu bearbeitende Oberfläche unterschiedlich stark verschmutzt ist. Unterschiedliche Oberflächen stellen unterschiedlichen Schleif- und/oder Reinigungsaufgaben dar. Gemäß dieser Ausführungsform ist es nun erstmals möglich, das Schleif- und Reinigungsvlies einfach zu wenden um solche unterschiedlichen Schleif- oder Reinigungsaufgaben zu lösen. Dies spart erhebliche Umrüstzeiten und Materialkosten ein.

Bevorzugt weisen die Noppen eine Höhe von 25 % bis 75 %, bevorzugter von 40 % bis 60 % und am bevorzugtesten von 50 % der Gesamthöhe des Vlieskörpers auf, wobei die Gesamthöhe von der Befestigungsoberfläche des Vlieskörpers bis zum höchsten Punkt einer Noppe gemessen wird. Die Höhe der Noppen ist ein weiterer Parameter, mit dem die Schleif- und Reinigungswirkung an unterschiedlich stark profilierte zu bearbeitende Oberflächen angepasst werden kann. Versuche haben ergeben, dass mit Noppen die eine Höhe von 25% bis 75% der Gesamthöhe des Vlieskörpers aufweisen, für die allermeisten Anwendungsfälle ein gutes Bearbeitungsergebnis erzielt wird. Für viele Anwendungen ist die Reinigungswirkung am besten, wenn die Noppen eine Höhe von ungefähr 50 % der Gesamthöhe des Vlieskörpers ausmachen. Mit solchen Abmaßen wird ein gutes Verhältnis zwischen Flexibilität der Noppen und der für die Reinigungswirkung erforderlichen Steifigkeit erzielt.

Bevorzugt weisen die Noppen eine maximale Breite der Grundfläche der Noppe von 3 mm bis 30 mm auf, bevorzugt eine maximale Breite von 10 mm bis 15 mm. Über die Breite der Noppen kann das Schleif- und Reinigungsvlies ebenfalls an die spezifische Reinigungsaufgabe angepasst werden. Wenige große Noppen eignen sich eher für Oberflächenstrukturen mit einer grob strukturierten Oberfläche, zum Beispiel ein Noppenboden mit großflächigen, runden Noppen. Hingegen wird ein Schleif- und Reinigungsvlies mit vielen kleinen Noppen bevorzugt bei eher fein strukturierten Oberflächen verwendet werden.

In einer bevorzugten Ausführungsform weisen die Noppen der Bearbeitungsoberfläche als Grundflächenformen Kreise und/oder Vielecke und/oder ellipsenartige Geometrien auf. Die Grundflächenform der Noppen kann ebenfalls variieren. Hierbei ist es aus fertigungstechnischer Sicht zwar bevorzugt, eine runde Grundflächenform zu wählen. Jedoch können für andere Bearbeitungsaufgaben auch andere Geometrien, wie Vielecke oder ellipsenartige Geometrien verwendet werden.

Es sind auch Schleif- und Reinigungskörper möglich, bei denen die Bearbeitungsoberfläche in verschiedene Zonen eingeteilt wird, die jeweils ausschließlich mit Noppen einer einzelnen Grundflächenform versehen sind.

In einer weiteren Ausführungsform können Noppen mit unterschiedlichen Grundflächenformen gleichmäßig über die Bearbeitungsoberfläche verteilt sein. Hierdurch ist es möglich, das Schleif- und Reinigungsvlies in einem weiteren Aspekt an die spezifische Reinigungsaufgabe anzupassen.

Bevorzugt weist der Vlieskörper ein Flächengewicht von 120 g/m² bis 2.000 g/m², bevorzugter ein Flächengewicht von 500 g/m² bis 1.600 g/m² auf. Damit ist der Vlieskörper einerseits steif genug und andererseits nachgiebig genug, so dass die Noppen in die Vertiefungen der zu bearbeitenden Oberfläche gedrückt werden, um dort eine gute Reinigungsleistung zu erzielen.

Bevorzugt besteht das Schleif- und Reinigungsvlies aus Fasern auf Polyester- oder Polyamid-Basis, die eine Stärke von 1 - 400 dtex, bevorzugt 27 - 60 dtex aufweisen. Fasern auf Polyester- oder Polyamid-Basis zeichnen sich vor allem dadurch aus, dass sie besonders beständig sind, wenn sie mit aggressiven Medien wie Lösungsmitteln in Reinigungsmitteln in Kontakt kommen. Damit wird die Standzeit des Schleif- und Reinigungsvlieses signifikant erhöht. Über die Stärke der Fasern kann die Steifigkeit des Schleif- und Reinigungsvlieses, insbesondere der Noppen eingestellt werden. Dickere Fasern eignen sich für gröbere Reinigungsaufgaben und größere Schleifkorndurchmesser. Mit einer Faserstärke im Bereich von 1 dtex bis 400 dtex, bevorzugt 27 dtex - 60 dtex, können die Schleif- und Reinigungsvliese in geeigneter Weise an die Anforderungen der Schleif- und/oder Reinigungsaufgabe angepasst werden.

Bevorzugt weist der Vlieskörper eine Gesamthöhe von 4 mm - 30 mm, bevorzugter eine Gesamthöhe von 8 mm - 20 mm und am bevorzugtesten eine Gesamthöhe von 10 mm - 15 mm auf. Die Gesamthöhe des Vlieskörpers ist vor allem hinsichtlich der gewünschten Nachgiebigkeit und Noppenhöhe des Schleif- und Reinigungsvlieses von Bedeutung. Bei einer Gesamthöhe des Vlieskörpers im Bereich von 5 mm bis 30 mm können die Schleif- und Reinigungsvliese in geeigneter Weise an die Anforderungen der Schleif- und/oder Reinigungsaufgabe angepasst werden.

Bevorzugt weist der Vlieskörper eine runde Scheibenform mit einem Durchmesser von 200 mm - 800 mm auf. Damit eignet sich das Schleif- und Reinigungsvlies insbesondere zur Verwendung mit einer Scheiben- Bodenreinigungsmaschine. Zur Verwendung mit einem Schwingschleifer kann der Vlieskörper alternativ ein Rechteckzuschnitt von 115 mm - 230 mm Breite und 200 mm - 500 mm Länge sein.

Die oben genannte Aufgabe wird auch gelöst durch ein Verfahren zur Herstellung eines Schleif- und Reinigungsvlieses zum maschinellen Schleifen und maschinellen Reinigen, aufweisend eine genoppte Bearbeitungsoberfläche, wobei das Verfahren die nachfolgenden Schritte aufweist:
a. Einlegen einer Vliesbahn oder eines Vlieskörpers in eine Presse, wobei eine Platte der Presse eben ist und eine Gegenplatte der Presse ein Lochblech aufweist;
b. Zusammenfahren der Platten mit einem Druck von 50 bar bis 200 bar und einer Temperatur von 50 °C bis 200 °C;
c. Halten des Druckes; und
d. Entnehmen der Vliesbahn oder des Vlieskörpers, aufweisend eine genoppte Bearbeitungsoberfläche.

Das erfindungsgemäße Verfahren zur Herstellung des Schleif- und Reinigungsvlieses ist besonders effizient. Da die Noppen aus dem Vlieskörper bzw. der Vliesbahn heraus gebildet werden, entfallen aufwändige, kostenintensive und umweltbelastende Herstellungsschritte, wie beispielsweise ein Aufbringen von separaten Noppen mittels einer Klebeschicht. Mit dem vorliegenden Herstellungsverfahren werden die Verformungseigenschaften von Vliesmaterialien ausgenutzt, die sich unter Druck- und Wärmeeintrag plastisch verformen lassen und nach dem Wegfall von Druck- und Wärmeeintrag die neu angenommen Form beibehalten.

Bevorzugt weist das Verfahren den Schritt des Ausschneidens oder Ausstanzens eines Vlieskörpers aus der Vliesbahn auf, wenn in Schritt a. eine Vliesbahn verwendet wurde. Dies hat den Vorteil, dass in einem Pressschritt eine große Fläche genoppter Vliesbahn hergestellt werden kann, die dann später in einzelne Schleif- und Reinigungsvliese geteilt werden kann. Aus der Vliesbahn wird nach dem Herstellen der genoppten Bearbeitungsfläche die endgültige Form eines fertigen Schleif- und Reinigungsvlieses ausgeschnitten oder ausgestanzt. Damit kann der Pressvorgang möglichst effektiv durchgeführt werden.

Bevorzugt weist das Verfahren weiterhin die Schritte auf:
f. Vor dem Einlegen der Vliesbahn oder eines Vlieskörpers in die Presse, Aufbringen eines Bindeharzes auf den Vlieskörper oder die Vliesbahn; und
g. Aufbringen von Schleifpartikeln auf das Bindeharz.

Schleifpartikel werden aufgebracht, wenn ein hoher Materialabtrag erzielt werden soll, zum Beispiel bei Schleifvorgängen. Bevorzugt wird als Bindeharz Polyurethan, Latex oder eine Acryldispersion eingesetzt, da diese Harzsysteme besonders geeignet sind, aggressiven Reinigungsmitteln zu widerstehen und dadurch die Standzeit im Vergleich zu anderen Bindeharzarten deutlich verbessert wird. Als Schleifpartikel wird bevorzugt Silikat und/oder Aluminiumoxid und/oder Siliziumkarbid und/oder Zirkon und/oder Keramik und/oder Diamant eingesetzt. Die Auswahl erfolgt im Hinblick auf die jeweils zu bewältigende Schleif- und/oder Reinigungsaufgabe, um das Schleif- und Reinigungsvlies optimal anzupassen. Bevorzugt werden das Bindeharz und die Schleifpartikel vor dem Verpressen der Vliesbahn oder des Vlieskörpers aufgebracht, damit die Noppen nicht durch eine thermische Behandlung zum Aushärten des Bindeharzes beeinträchtigt werden.

Die oben genannte Aufgabe wird auch gelöst durch eine Verwendung eines oben genannten Schleif- und Reinigungsvlieses zum maschinellen Schleifen und maschinellen Reinigen von strukturierten Bodenbelägen mit einer Scheiben- Bodenreinigungsmaschine. Mittels der oben beschriebenen Schleif- und Reinigungsvliese können nun erstmals tiefere Stellen eines strukturierten Bodenbelags erreicht werden. Somit können derartige Bodenbeläge mit einer Scheiben-Bodenreinigungsmaschine maschinell gereinigt werden, wobei die genoppte Bearbeitungsoberfläche des Reinigungskörpers in die tieferen Stellen der strukturierten Oberfläche des Bodenbelags eindringen kann und die Täler ebenfalls bearbeiten kann. Durch das verwendete Vliesmaterial wird weiterhin eine gegenüber dem Stand der Technik stark verbesserte Standzeit des Schleif- und Reinigungsvlieses erreicht.

Bevorzugt wird das Schleif- und Reinigungsvlies mit der Scheiben-Bodenreinigungsmaschine verbunden durch
a. bloßes Aufsetzen der Scheiben-Bodenreinigungsmaschine auf das Schleif- und Reinigungsvlies; oder
b. Anheften des Schleif- und Reinigungsvlieses an der Scheiben-Bodenreinigungsmaschine mit Hilfe einer Klettadaptionsschicht.

Für den Fall, dass das Schleif- und Reinigungsvlies durch bloßes Aufsetzen der Scheiben-Bodenreinigungsmaschine auf das Schleif- und Reinigungsvlies verbunden wird, wird die Verbindung über einen Reibschluss erzeugt, insbesondere durch die die Gewichtskraft der Scheiben- Bodenreinigungsmaschine. Für den anderen Fall, dass das Schleif- und Reinigungsvlies durch ein Anheften des Schleif- und Reinigungsvlieses mit der Scheiben-Bodenreinigungsmaschine mit Hilfe einer Klettadaptionsschicht verbunden wird, kann das Schleif- und Reinigungsvlies leicht und sicher an der Schleif- und/oder Reinigungsmaschine befestigt werden. Damit ist auch eine maschinelle Bearbeitung von vertikalen strukturierten Oberflächen möglich.

Weitere bevorzugte Ausführungsformen ergeben sich aus den Unteransprüchen.

### 4. Kurze Beschreibung der Zeichnung

Im Folgenden werden bevorzugte Ausführungsformen der vorliegenden Erfindung anhand der begleitenden Figuren beschrieben. In denen zeigt:
- Fig. 1:: ein erfindungsgemäßes Schleif- und Reinigungsvlies mit kreisförmigen Noppen in einer Draufsicht;
- Fig. 2:: das Schleif- und Reinigungsvlies der Fig. 1 in einer Schnittdarstellung entlang einer Schnittlinie s-s sowie einen vergrößerten Ausschnitt hieraus;
- Fig. 3:: das Schleif- und Reinigungsvlies der Fig. 1 in einer weiteren Ausführungsform, in der das Schleif- und Reinigungsvlies eine Klettadaptionsschicht aufweist, in einer Schnittdarstellung entlang der Schnittlinie s-s sowie einen vergrößerten Ausschnitt hieraus;
- Fig. 4:: eine weitere Ausführungsform eines ein erfindungsgemäßen Schleif- und Reinigungsvlieses mit kreisförmigen Noppen in einer Draufsicht;
- Fig. 5:: eine weitere Ausführungsform eines ein erfindungsgemäßen Schleif- und Reinigungsvlieses mit kreisförmigen Noppen in anderer Anordnung in einer Draufsicht;
- Fig. 6:: eine weitere Ausführungsform eines erfindungsgemäßen Schleif- und Reinigungsvlieses mit kreisförmigen Noppen in einer Draufsicht;
- Fig. 7:: eine weitere Ausführungsform eines erfindungsgemäßen Schleif- und Reinigungsvlieses mit quadratischen Noppen in einer Draufsicht;
- Fig. 8:: eine weitere Ausführungsform eines erfindungsgemäßen Schleif- und Reinigungsvlieses mit dreieckigen Noppen in einer Draufsicht;
- Fig. 9:: eine weitere Ausführungsform eines erfindungsgemäßen Schleif- und Reinigungsvlieses mit dreieckigen Noppen in einer Draufsicht;
- Fig. 10:: eine weitere Ausführungsform eines erfindungsgemäßen Schleif- und Reinigungsvlieses mit ellipsenförmigen Noppen in einer Draufsicht;
- Fig. 11:: eine weitere Ausführungsform eines ein erfindungsgemäßen Schleif- und Reinigungsvlieses mit ellipsenförmigen Noppen in einer Draufsicht;
- Fig. 12:: einen teilweise Querschnittsansicht einer schematisch dargestellten Presse zur Durchführung eines erfindungsgemäßen Verfahrens zur Herstellung eines Schleif- und Reinigungsvlieses vor dem Pressen;
- Fig. 13:: die teilweise Querschnittsansicht der Presse aus Fig. 12 während des Pressens;
- Fig. 14:: die teilweise Querschnittsansicht der Presse aus Fig. 12 nach dem Pressen;
- Fig. 15A:: eine schematische Querschnittsansicht einer weiteren bevorzugten Ausführungsform eines erfindungsgemäßen Schleif- und Reinigungsvlieses;
- Fig. 15B:: eine schematische Querschnittsansicht einer weiteren bevorzugten Ausführungsform eines erfindungsgemäßen Schleif- und Reinigungsvlieses; und
- Fig. 15C:: eine schematische Querschnittsansicht einer weiteren bevorzugten Ausführungsform eines erfindungsgemäßen Schleif- und Reinigungsvlieses.

### 5. Beschreibung bevorzugter Ausführungsformen

Im Folgenden werden bevorzugte Ausführungsformen der vorliegenden Erfindung anhand der begleitenden Figuren beschrieben. Merkmale einzelner Ausführungsformen lassen sich mit Merkmalen anderer Ausführungsformen kombinieren, auch wenn dies nicht ausdrücklich dargestellt oder erläutert ist.

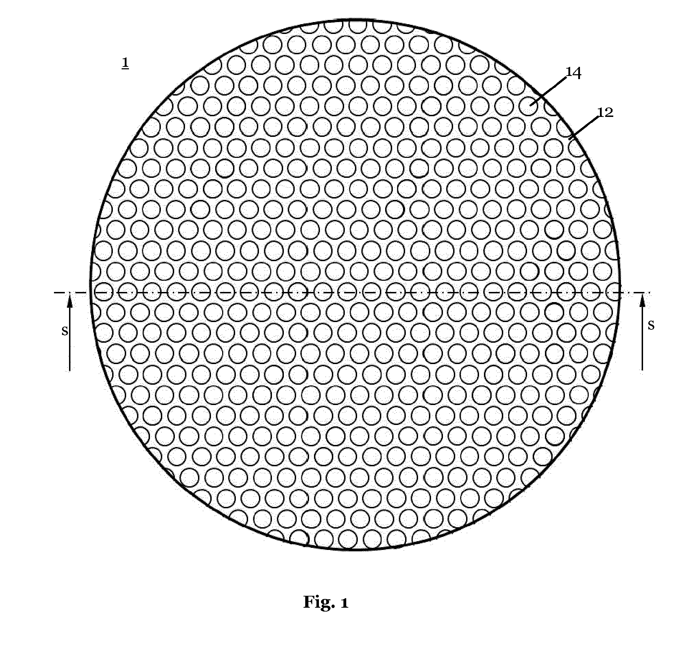

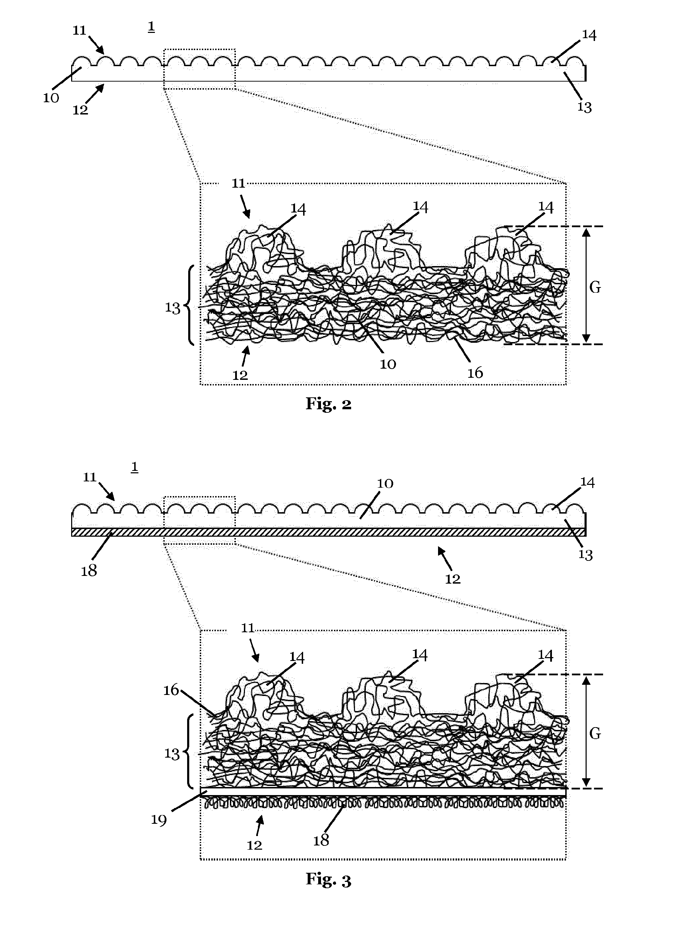

Die Fig. 1 und 2 zeigen ein Schleif- und Reinigungsvlies 1 in einer Draufsicht auf die Bearbeitungsoberfläche 11 und einer Schnittansicht. Das Schleif- und Reinigungsvlies 1 weist einen Vlieskörper 10 auf, der eine genoppte Bearbeitungsoberfläche 11 und eine ebene Befestigungsoberfläche 12 umfasst, die der genoppten Bearbeitungsoberfläche 11 gegenüberliegt. Die genoppte Bearbeitungsoberfläche 11 setzt sich zusammen aus der Oberfläche der Noppen 14 und den zwischen den Noppen 14 liegenden Bereichen der Oberfläche einer Grundschicht 13. Die Grundschicht 13 bildet den Teil des Vlieskörpers 10, aus dem die Vielzahl von Noppen 14 hervorstehen.

Wie in Fig. 1 dargestellt, sind die Noppen 14 ganzflächig über die Oberfläche der Grundschicht 13 verteilt, um so eine möglichst gleichmäßige Bearbeitung einer zu bearbeitenden Oberfläche, zum Beispiel eines strukturierten Kunststoff-Bodenbelags, zu ermöglichen. Hierzu wird eine Scheiben- Bodenreinigungsmaschine mit einem Schleif- und Reinigungsvlies 1 ausgerüstet, um einen strukturierten Bodenbelag abzuschleifen und/oder zu reinigen. Ein Schleif- und Reinigungsvlies 1 kann jedoch auch für andere Einsatzbereiche verwendet werden, wie zum Beispiel zum Schleifen oder Reinigen anderer strukturierter Oberflächen, z.B. Wände mittels einer handgeführten Schleif- und/oder Reinigungsmaschine.

In der Ausführungsform der Figur 1 sind die Noppen 14 mit einer kreisförmigen Grundfläche ausgeführt, wobei die Noppen zueinander so versetzt sind, dass die Mittelpunkte von drei zueinander benachbarten Noppen 14 ein gleichseitiges Dreieck bilden. Hierdurch wird eine möglichst hohe Dichte von Noppen 14 pro Bearbeitungsfläche 11 erreicht, was speziell für Schleif- und/oder Reinigungsaufgaben von Vorteil ist, um eine hohe Abtragsleistung zu erzielen.

Die genoppte Bearbeitungsoberfläche 11 ist bevorzugt mit einem Bindeharz versetzt, insbesondere einem Bindeharz auf Polyurethan- oder Latexbasis oder aus einer Acryldispersion, um Schleifpartikel anzukleben, welche die Reinigungsleistung verbessern. Die Schleifpartikel können beispielsweise aus Silikat oder Aluminiumoxid oder Siliziumkarbid oder Zirkon oder Keramik oder Diamant oder Mischungen daraus bestehen. Es können auch andere Schleifpartikel verwendet werden. Die Schleif- und Reinigungsvliese 1 werden u.a. durch die Auswahl des Materials für die Schleifpartikel und der Schleifpartikelgröße an die jeweilige Schleif- und/oder Reinigungsaufgabe angepasst. Für leichte Reinigungsaufgaben werden auch Schleif- und Reinigungsvliese 1 ohne Schleifpartikel verwendet.

Das Bindeharz wird bevorzugt so gewählt, dass es aggressiven Reinigungsmitteln wiedersteht, die bei bestimmten Reinigungsaufgaben verwendet werden. Daher wird die Standzeit des Schleif- und Reinigungsvlieses verbessert. Durch das Bindeharz kann auch der Vlieskörper 10 selbst gehärtet bzw. versteift werden, wodurch sich die Reinigungsleistung verbessern kann.

Fig. 2 zeigt das Schleif- und Reinigungsvlies 1 der Fig. 1 in einer Schnittdarstellung entlang der Schnittlinie s-s und einen vergrößerten Ausschnitt hieraus. In dem vergrößerten Ausschnitt der Fig. 2 ist zu sehen, dass der Vlieskörper 10 aus einer Vielzahl von miteinander unregelmäßig verbundenen Fasern 16 besteht. Diese weisen eine Faserdicke von 1 dtex bis 400 dtex, bevorzugt von 27 dtex - 60 dtex auf. Die Fasern 16 bestehen aus einem Material auf Polyester- oder Polyamid-Basis, wodurch eine hohe Beständigkeit gegenüber scharfen Reinigungsmitteln, wie sie beispielsweise in Krankenhäusern eingesetzt werden, gewährleistet wird. Für gröberes Schleifkorn wird auch eine dickere Faserdicke verwendet.

Die Noppen 14 sind unmittelbar aus der Grundschicht 13 heraus gebildet, indem ein Teil der Fasern, welche die Grundschicht 13 bilden, aus der Grundschicht 13 austreten, um die Noppen 14 zu formen. Die Noppen 14 sind dabei ein integraler Bestandteil des Vlieskörpers 10, sodass diese fest mit der Grundschicht 13 verbunden sind, ohne dass hierfür Klebstoffe oder ähnliches benötigt werden. Diese Gestalt erhöht weiterhin die Standzeit des Schleif- und Reinigungsvlieses 1.

Der Vlieskörper 10 hat eine Gesamthöhe G die sich aus der Höhe der Grundschicht 13 und der Höhe der Noppen 14 zusammensetzt. Die Gesamthöhe G wird daher zwischen Befestigungsoberfläche 12 und höchstem Punkt einer Noppe 14 gemessen.

Die Noppen 14 weisen eine gegenüber der Grundschicht 13 verminderte Dichte auf, was den Noppen 14 eine bessere Nachgiebigkeit verleiht. Damit können die Noppen 14 einfacher in Täler von strukturierte Bodenbeläge eindringen , um auch den Talgrund zu bearbeiten.

Die in der Ausführungsform nach Fig. 2 dargestellte ebene Befestigungsoberfläche 12 dient dazu, das Schleif- und Reinigungsvlies unmittelbar mit einer Schleif- und/oder Reinigungsmaschine, wie zum Beispiel mit dem Bürstenteller einer Scheiben-Bodenreinigungsmaschine, zu verbinden. Die Scheiben-Bodenreinigungsmaschine wird hierzu einfach auf das am Boden liegende Schleif- und Reinigungsvlies 1 gestellt. Durch die Schwerkraft wird ein ausreichender Reibschluss zwischen Scheiben-Bodenreinigungsmaschine und Schleif- und Reinigungsvlies 1 erzeugt, um das Schleif- und Reinigungsvlies 1 schlupffrei anzutreiben. Diese Ausführungsform des Schleif- und Reinigungsvlieses 1 zeichnet durch ihren einteiligen Aufbau aus, d. h. das Schleif- und Reinigungsvlies 1 besteht ausschließlich aus dem Vlieskörper 10, auf dem, nach Bedarf, mittels Bindeharz Schleifpartikel angeordnet sein können.

Fig. 3 zeigt das Schleif- und Reinigungsvlies der Fig. 1 in einer anderen Ausführungsform, in der das Schleif- und Reinigungsvlies 1 eine zusätzliche Klettadaptionsschicht 18 zur Verbindung mit einer Schleif- und/oder Reinigungsmaschine aufweist. Die Klettadaptionsschicht 18 ist mittels einer Klebstoffschicht 19 an der Befestigungsoberfläche 12 mit dem Vlieskörper 10 verbunden. Bevorzugt ist die Klettadaptionsschicht 18 eine Klettveloursschicht oder eine Klettvliesschicht, die sich mit einer Hakenschicht an einer Schleif- und/oder Reinigungsmaschine verbinden kann. Das Klettsystem sorgt so für eine schlupffreie Kraftübertragung von der Schleif- und/oder Reinigungsmaschine auf das Schleif- und Reinigungsvlies 1, ohne dass hierfür ein Schwerkrafteinfluss notwendig ist.

Diese Ausführungsform nach Fig. 3 ist für Anwendungsfälle geeignet, bei denen handgeführte Schleif- und/oder Reinigungsmaschinen eingesetzt werden, um Schleif- und Reinigungsarbeiten nicht nur an Böden sondern auch vertikalen Wänden, Treppen, oder gar "überkopf" ausführen zu können.

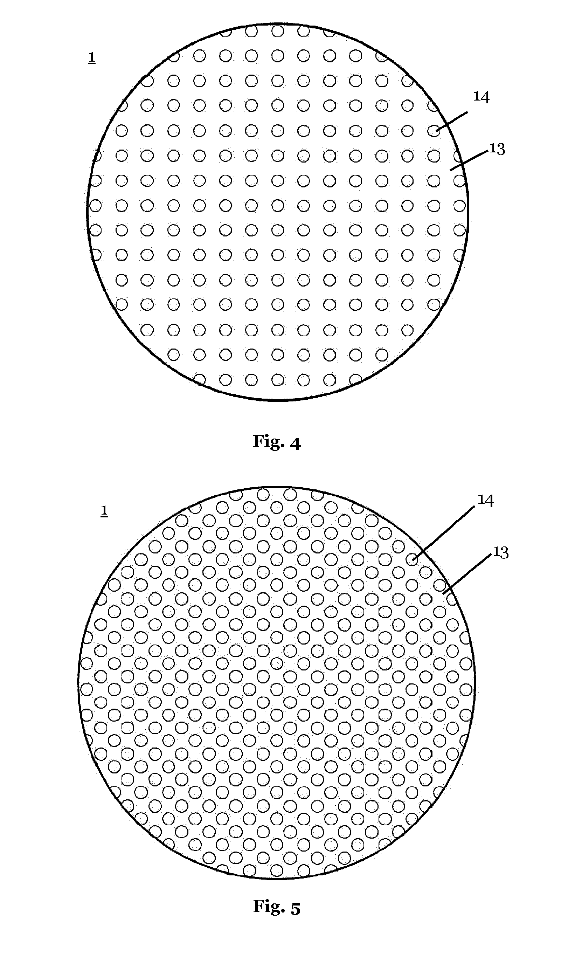

Fig. 4 bis 11 zeigen verschiedene Ausführungsformen des Schleif- und Reinigungsvlieses 1 wobei Noppenformen, -größen und -anordnungen beispielhaft variiert werden. Die Figuren 4 - 11 zeigen jeweils die Bearbeitungsoberfläche 11 mit der Grundschicht 12 und den Noppen 14, wobei die Noppen 14 je nach Figur eine andere Form und/oder eine andere Anordnung und/oder eine andere Größe aufweisen. Die Noppen 14 können eine Grundflächenabmessung und Noppenhöhe im Bereich von 3mm - 20mm aufweisen.

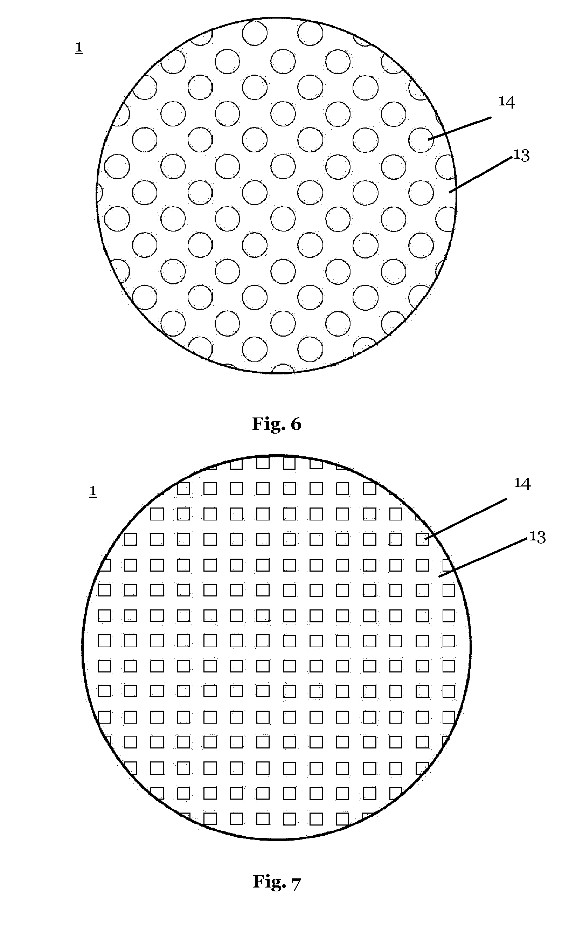

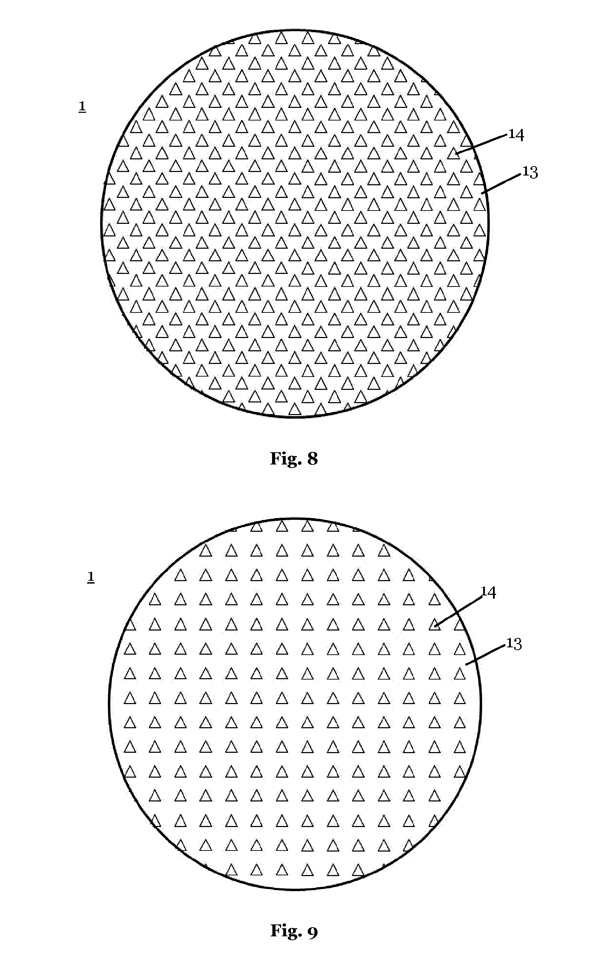

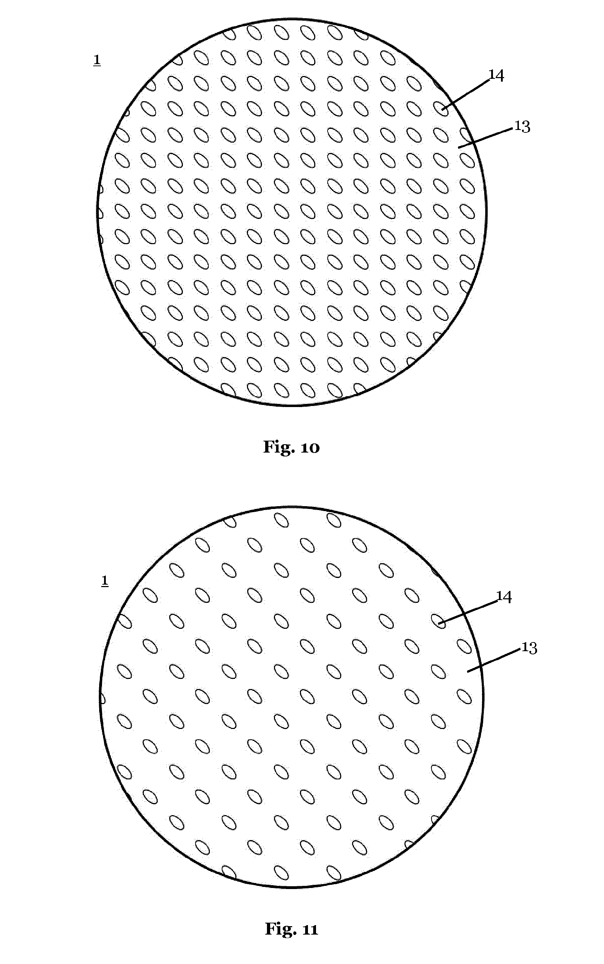

Bei den Ausführungsformen der Fig. 4, 5 und 6 sind die Noppen 14 an ihrer Grundfläche kreisförmig; in Fig. 7 sind sie quadratisch; in den Fig. 8 und 9 dreieckig und in Fig. 10 und 11 ellipsenartig. Die Auswahl der Grundflächenform der Noppen 14 erfolgt im Hinblick auf die jeweils gewählte Schleif- und/oder Reinigungsaufgabe, um das Schleif- und Reinigungsvlies 1 optimal an diese Aufgabe anzupassen.

In der Ausführungsbeispielen der Fig. 1 sind drei benachbarte Noppen 14 so versetzt zueinander angeordnet, dass ihre Mittelpunkte ein gleichseitiges Dreieck bilden. In den Ausführungsformen der Fig. 4 bis 11 bilden die Mittelpunkte vier benachbarter Noppen 14 die Eckpunkte eines Quadrats. Durch die unterschiedlichen Anordnungen lässt sich die Noppendichte auf der Bearbeitungsoberfläche 11 variieren.

Die Vielzahl von Noppen 14 ist bevorzugt gleichmäßig über die gesamte Bearbeitungsoberfläche 11 verteilt. In Einzelfällen können jedoch spezielle Bereiche auf der Bearbeitungsoberfläche 11 ausgespart sein, um beispielsweise Befestigungsmittel oder Absaugöffnungen aufzunehmen.

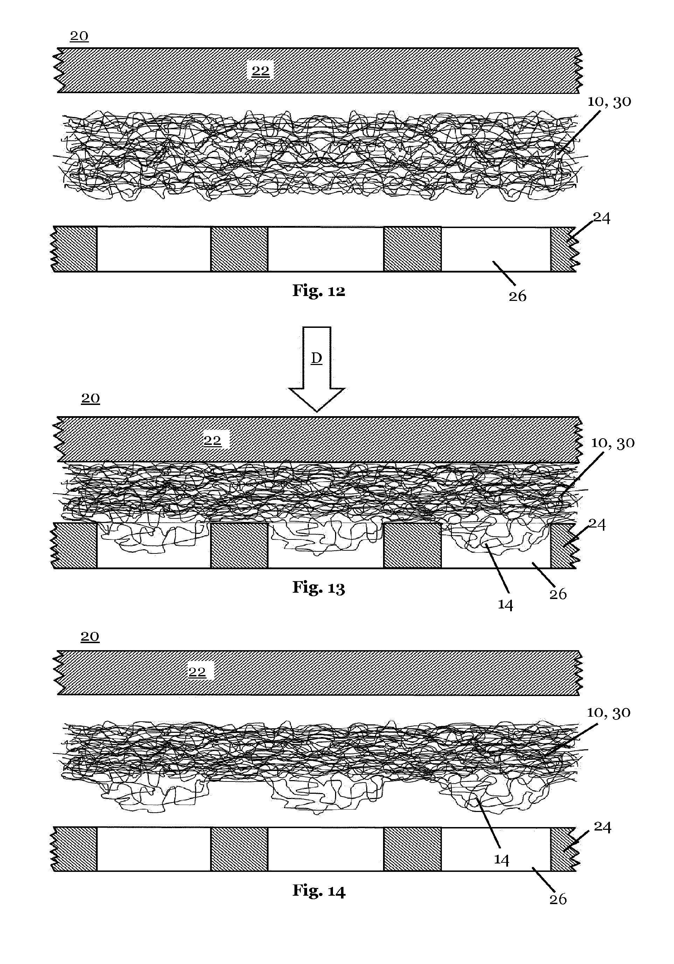

In den Figuren 12 bis 14 wird ein Verfahren zur Herstellung eines Schleif- und Reinigungsvlieses 1 veranschaulicht. Die Figuren 12 bis 14 zeigen eine vereinfachte Prinzipskizze eines Ausschnitts einer Presse 20 in verschiedenen Phasen während der Herstellung eines Schleif- und Reinigungsvlieses 1.

Fig. 12 zeigt die Presse 20 beim Einlegen eines noch planen Vlieskörpers 10, bzw. einer planen Vliesbahn 30. In dieser Phase weist der Vlieskörper 10 bzw. die Vliesbahn 30 noch zwei plane, parallele Oberflächen auf. Die Presse 20 besteht aus einer ersten Platte 22, die eben und durchgängig ist. Eine zweite Platte, die Gegenplatte 24 besteht aus einem Lochblech mit Öffnungen 26. Die Öffnungen 26 bestimmen die spätere Grundflächenform der Noppen 14.

Die Platten 22, 24 der Presse 20 haben bevorzugt eine Größe von ca. 1 m auf 2 m und beide Platten 22, 24 können beheizt werden, um den Vlieskörper 10 bzw. die Vliesbahn 30 zur besseren Verformung aufzuheizen. Die für die anschließende Formgebung erforderlichen Temperaturen werden durch das zu verarbeitende Vliesmaterial bestimmt und liegen in einem Bereich zwischen 80 °C bis 200 °C, bevorzugt zwischen 80°C und 130°C. Als Presse 20 eignet sich eine Flachpresse, die einen Druck von 50 Bar - 200 Bar erzeugen kann. Ein Druck von 130 Bar hat sich als gut geeignet erwiesen.

Der Vlieskörper 10 unterscheidet sich von der Vliesbahn 30 dadurch, dass der Vlieskörper 30 bereits auf die Größe des späteren Schleif- und Reinigungsvlieses 1 zugeschnitten wurde. Wird in der Presse 20 eine Vliesbahn 30 verarbeitet, so findet der Schritt des Zuschneidens nach dem Pressschritt statt. Entsprechend der Größe der Presse 20 kann eine Vliesbahn 30 beispielsweise eine Größe von 1 m auf 2 m aufweisen.

Fig. 13 zeigt die Presse 20 während des Pressschritts. Die Platten 22, 24 werden zusammengefahren und mit einem Druck D von bevorzugt 50 - 200 Bar, insbesondere 130 Bar beaufschlagt. Hierbei findet die Ausformung der Noppen 14 statt. Während des Pressschritts wird der Vlieskörper 10 bzw. die Vliesbahn 30 erhitzt und dadurch plastisch verformbar. An den Stellen des Lochbleches 20, an denen die Fasern 16 auf eine Öffnung 26 treffen, weichen die Fasern 16 dem Druck aus und bilden in den Öffnungen 26 die späteren Noppen 14 aus. Der Druck wird bis zu 5 Minuten aufrechterhalten.

Fig. 14 zeigt die Presse 20 nach dem Pressschritt. Die Druckbeaufschlagung wird aufgehoben und die Platten 22, 24 wurden wieder auseinandergefahren, sodass der Vlieskörper 10 bzw. die Vliesbahn 30 nunmehr entnommen werden und abkühlen kann. Der Vlieskörper 10 bzw. die Vliesbahn 30 verbleibt nach dem Wegfall der Temperatur- und Druckbeaufschlagung weitestgehend in der nun erzeugten Form, sodass der Vlieskörper 10 bzw. die Vliesbahn 30 nach dem Pressschritt eine genoppte Bearbeitungsoberfläche 11 aufweist.

Es können weitere Bearbeitungsschritte erfolgen, um den Vlieskörper 10 bzw. die Vliesbahn 30 an die zu bewältigende Schleif- und/oder Reinigungsaufgabe anzupassen. So kann der Vlieskörper 10 bzw. die Vliesbahn 30 vor oder nach dem Pressen zum Beispiel noch mit Schleifpartikeln versehen werden. Hierzu wird ein Bindeharz, bevorzugt ein Bindeharz auf Polyurethan- oder Latexbasis, auf den Vlieskörper 10 bzw. die Vliesbahn 30 aufgebracht, zum Beispiel aufgesprüht. Dann werden Schleifpartikel aus Silikat und/oder Aluminiumoxid und/oder Karbid und/oder Zirkon und/oder Keramik und/oder Diamant oder Mischungen davon appliziert, welche in die Bindeharzschicht ganz oder teilweise einsinken und nach dem Aushärten des Bindeharzes von diesem an der Bearbeitungsoberfläche 11 des Vlieskörpers 10 bzw. der Vliesbahn 30 festgehalten werden.

Je nach gewünschter Befestigungsart des Schleif- und Reinigungskörpers 1 an einer Schleif- und/oder Reinigungsmaschine kann auch eine Klettadaptionsschicht 18 an der Befestigungsoberfläche 12 des Vlieskörpers 10 bzw. der Vliesbahn 30 angebracht werden. Hierfür wird in bekannter Weise eine Klebstoffschicht 19, welche vom oben beschriebenen Bindeharz verschieden sein kann, auf die Befestigungsoberfläche 12 des Vlieskörpers 10 bzw. der Vliesbahn 30 aufgebracht, zum Beispiel aufgesprüht. Dann wird eine Klettadaptionsschicht 18, bevorzugt eine Klettveloursschicht oder Klettvliesschicht, aufgebracht, welche teilweise in die Klebstoffschicht 19 einsinkt und nach dem Aushärten der Klebstoffschicht 19 von dieser an der Befestigungsoberfläche 12 des Vlieskörpers 10 bzw. der Vliesbahn 30 gehalten wird. Alternativ wird eine Klettadaptionsschicht 18 mit einem Schmelzkleber verwendet. Da das Aushärten der Klebstoffschicht 19 einen Wärmeeintrag erfordert wird das Ankleben der Klettadaptionsschicht 18 vor dem Verpressen des Vlieskörpers 10 durchgeführt.

Wenn eine Vliesbahn 30 verpresst wurde, werden nun aus der Vliesbahn entsprechende Vlieskörper 10 nach bekannten Verfahren ausgestanzt oder ausgeschnitten. In der Regel werden aus einer Vliesbahn 30 eine Vielzahl von Vlieskörpern 10 ausgeschnitten oder ausgestanzt.

Die Verfahrensschritte der Applikation von Schleifpartikeln und der Applikation einer Klettadaptionsschicht werden bevorzugt vor dem Verpressen des Vlieskörpers oder der Vliesbahn durchgeführt, damit nach dem Verpressen kein weiterer Wärmeeintrag notwendig ist.

Maschinen, welche zum maschinellen Schleifen und Reinigen eingesetzt werden können, sind zum Beispiel tragbare Schleif- und/oder Reinigungsmaschinen (z.B. Rotationsschleifer), von einem Anwender vor sich herzuschiebende Schleif- und/oder Reinigungsmaschinen (z.B. Einscheiben-Bodenreinigungsmaschinen) oder Schleif- und/oder Reinigungsmaschinen, auf welchen der Anwender sitzt und auf ihnen herumfährt. Diesen Geräten ist gemeinsam, dass das Schleif- und Reinigungsvlies 1 motorisch, meist durch einen Elektromotor, in rotatorische oder oszillatorische Bewegungen versetzt wird.

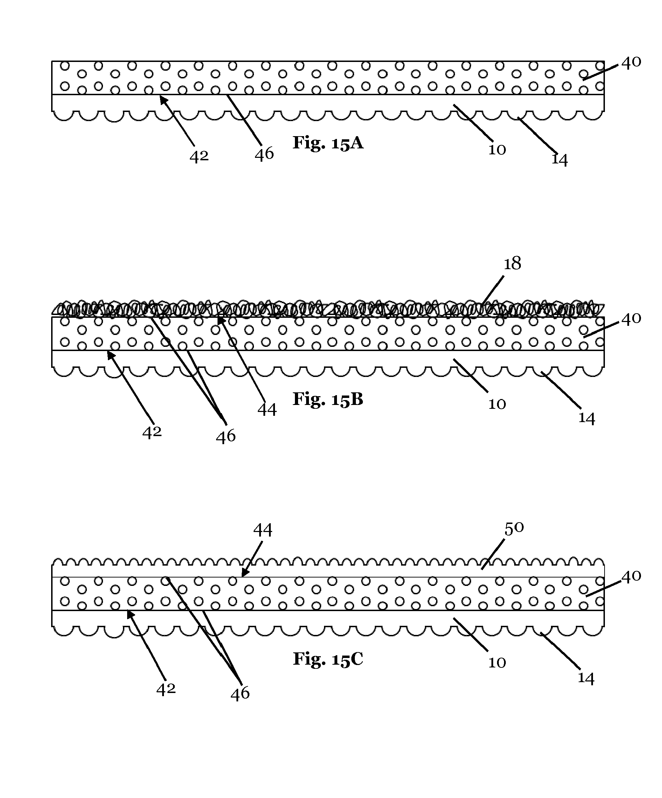

Figur 15A zeigt eine schematische Querschnittsansicht einer weiteren bevorzugten Ausführungsform eines erfindungsgemäßen Schleif- und Reinigungsvlieses 1, wobei das Schleif- und Reinigungsvlies 1 aus dem Vlieskörper 10 sowie einem Schaumkörper 40 besteht, wobei der Schaumkörper 40 an der Befestigungsoberfläche 12 des Vlieskörpers 10 angeordnet ist.

Der Schaumkörper 40 besteht bevorzugt aus einem Polymerschaum gebildet und kann durch eine entsprechende Materialauswahl, die Schaumdichte und die Schaumhöhe an die zu bewältigende Schleif- und/oder Reinigungsaufgabe angepasst werden.

Bei der Wahl des Materials des Schaumkörpers 40 wird bevorzugt ein Material verwendet, welches aggressiven Reinigungsmitteln widersteht ohne sich zu zersetzen. Somit wird die Lebensdauer des Schleif- und Reinigungsvlieses nicht durch den Schaumkörper 40 begrenzt. Bevorzugt besteht der Schaumkörper aus einem nachgiebigen Kunststoffschaum, z.B. einem Polyurethanschaum, Polyetherschaum oder ähnlichem Material.

Der Schaumkörper weist bevorzugt eine Höhe von 3 mm bis 30 mm auf, bevorzugter von 10 bis 20 mm auf. Hierdurch wird sichergestellt, dass der Schaumkörper 40 einerseits hoch genug ist, um eine zusätzliche Nachgiebigkeit für eine Anpassung an Unebenheiten der zu bearbeitenden Oberfläche bereitzustellen und andererseits nicht zu hoch ist, um weiterhin die erforderliche Bewegungsübertragung von der Schleif- und/oder Reinigungsmaschine auf das Schleif- und Reinigungsvlies 1 bereitzustellen.

Wenn Schleif- und Reinigungsvliese 1 an einer Scheibenbodenreinigungsmaschine verwendet werden, benötigen diese eine Mindesthöhe. Da jedoch während der Ausbildung der Noppen 14 mittels der Presse 20 ein Dickenverlust des Vlieskörpers 10 auftreten kann, wird die Mindesthöhe durch den Schaumkörper 40 gewährleistet.

Der Schaumkörper 40 ist bevorzugt auch ein Speicher für eine gewisse Menge Reinigungsflüssigkeit, welche während des Schleifens und/oder des Reinigens aus dem Speicher abgegeben wird.

Der Schaumkörper 40 ist bevorzugt mittels einer Klebstoffschicht 46 an einer ersten Seite 42 des Schaumkörpers 40 mit dem Vlieskörper 10 verklebt.

Figur 15B zeigt eine schematische Querschnittsansicht einer weiteren bevorzugten Ausführungsform eines erfindungsgemäßen Schleif- und Reinigungsvlieses 1, wobei das Schleif- und Reinigungsvlies 1 aus dem Vlieskörper 10, dem Schaumkörper 40 und der Klettadaptionsschicht 18 besteht, wobei der Schaumkörper 40 an der Befestigungsoberfläche 12 des Vlieskörpers 10 angeordnet ist und die Klettadaptionsschicht auf einer Oberfläche des Schaumkörpers 40 angeordnet ist, welche derjenigen Oberfläche des Schaumkörpers 40 entgegengesetzt ist, an welcher der Vlieskörper 10 angeordnet ist.

Die Klettadaptionsschicht 18 ist bevorzugt mit dem Schaumkörper 40 mittels einer Klebstoffschicht 46 an einer zweiten Seite 44 des Schaumkörpers 40 verklebt. Bevorzugt werden kalt aushärtende Klebstoffe für die Klebstoffschicht 46 verwendet. Werden warm aushärtende Klebstoffe eingesetzt, so findet das Verkleben bevorzugt ebenfalls vor der Ausbildung der genoppten Bearbeitungsoberfläche 11 statt, um die Noppen 14 nicht einem weiteren Wärmeeintrag auszusetzen, welcher eine unkontrollierte Rückbildung der Noppen 14 begünstigen könnte.

Wie bereits oben im Zusammenhang mit Fig. 3 erläutert, ist die Klettadaptionsschicht 18 eine Klettveloursschicht oder eine Klettvliesschicht, die sich mit einer Hakenschicht an einer Schleif- und/oder Reinigungsmaschine verbinden kann. Das Klettsystem sorgt so für eine schlupffreie Kraftübertragung von der Schleif- und/oder Reinigungsmaschine auf das Schleif- und Reinigungsvlies 1, ohne dass hierfür ein Schwerkrafteinfluss notwendig ist. Diese Ausführungsform ist insbesondere für Anwendungsfälle geeignet, bei denen handgeführte Schleif- und/oder Reinigungsmaschinen eingesetzt werden, um Schleif- und Reinigungsarbeiten nicht nur an Böden sondern auch an vertikalen Wänden, Treppen oder gar "überkopf" ausführen zu können.

Figur 15C zeigt eine schematische Querschnittsansicht einer weiteren bevorzugten Ausführungsform eines erfindungsgemäßen Schleif- und Reinigungsvlieses 1, wobei das Schleif- und Reinigungsvlies 1 aus dem ersten Vlieskörper 10, dem Schaumkörper 40 und einem zweiten Vlieskörper 50 besteht, wobei der Schaumkörper 40 an der Befestigungsoberfläche 12 des Vlieskörpers 10 angeordnet ist und der zweite Vlieskörper 50 auf einer Oberfläche des Schaumkörpers 40 angeordnet ist, welche derjenigen Oberfläche des Schaumkörpers 40 entgegengesetzt ist, an welcher der Vlieskörper 10 angeordnet ist.

Der zweite Vlieskörper 50 ist bevorzugt mittels einer Klebstoffschicht 46 an der zweiten Oberfläche 44 mit dem Schaumkörper 40 verklebt.

Bevorzugt werden für die oben genannten Klebstoffschichten 46 kalt aushärtende Klebstoffe verwendet. Werden warm aushärtende Klebstoffe eingesetzt, so findet das Verkleben bevorzugt vor der Ausbildung der genoppten Bearbeitungsoberfläche 11 statt, um die geformten Noppen 14 nicht einem weiteren Wärmeeintrag auszusetzen, welcher eine unkontrollierte Rückbildung der Noppen begünstigen könnte.

In der hier gezeigten Ausführungsform weist der zweite Vlieskörper 50 ein Reinigungsvermögen auf, welches von dem Reinigungsvermögen des ersten Vlieskörpers 10 verschieden ist, wie dies in Fig. 15C durch das unterschiedliche Noppenprofil angedeutet ist.

Das unterschiedliche Reinigungsvermögen der beiden Vlieskörper 10, 50 wird durch unterschiedliche Fasermaterialen und/oder unterschiedliche Faserstärken und/oder unterschiedliche Faserdichten und/oder unterschiedliche Vlieskörpergesamthöhen G und/oder unterschiedliche Schleifkornmaterialien und/oder unterschiedliche Schleifkorngrößen und/oder unterschiedliche Schleifkornmengen auf den beiden Bearbeitungsoberflächen der Vlieskörper und/oder unterschiedliche Noppengeometrien und/oder unterschiedliche Noppenhöhen und/oder unterschiedliche Noppenanordnungen bestimmt.

### Bezugszeichenliste

- 1: Schleif- und Reinigungsvlies
- 10: Vlieskörper
- 11: Bearbeitungsoberfläche
- 12: Befestigungsoberfläche
- 13: Grundschicht
- 14: Noppen
- 16: Fasern
- 18: Klettadaptionsschicht
- 19: Klebstoffschicht
- 20: Presse
- 22: erste Platte der Presse
- 24: Gegenplatte / Lochblech
- 26: Öffnung
- 30: Vliesbahn
- 40: Schaumkörper
- 42: erste Oberfläche des Schaumkörpers
- 44: zweite Oberfläche des Schaumkörpers
- 46: Klebstoffschicht
- 50: zweiter Vlieskörper
- D: Druck
- G: Gesamthöhe

## Patentansprüche

1. Schleif- und Reinigungsvlies (1) zum maschinellen Schleifen und maschinellen Reinigen von strukturierten Oberflächen, umfassend einen Vlieskörper (10), der eine Bearbeitungsoberfläche (11) mit einer Vielzahl von Noppen (14) aufweist.

2. Schleif- und Reinigungsvlies gemäß Anspruch 1, wobei die Noppen (14) der genoppten Bearbeitungsoberfläche (11) integrale Bestandteile des Vlieskörpers (10) sind.

3. Schleif- und Reinigungsvlies einem der Ansprüche 1 oder 2, wobei die Noppen (14) der genoppten Bearbeitungsoberfläche (11) eine geringere Dichte aufweisen, als die anderen Bereiche des Vlieskörpers (10).

4. Schleif- und Reinigungsvlies gemäß einem der vorherigen Ansprüche, wobei der Vlieskörper (10) weiterhin eine ebene Befestigungsoberfläche (12) aufweist, die der genoppten Bearbeitungsoberfläche (11) gegenüberliegt.

5. Schleif- und Reinigungsvlies gemäß Anspruch 4, wobei das Schleif- und Reinigungsvlies (1)
a. ausschließlich aus dem Vlieskörper (10) besteht; oder
b. aus dem Vlieskörper (10) sowie einer Klettadaptionsschicht (18) besteht, wobei die Klettadaptionsschicht (18) an der Befestigungsoberfläche (12) des Vlieskörpers (10) angeordnet ist; oder
c. aus dem Vlieskörper (10) sowie einem Schaumkörper (40) besteht, wobei der Schaumkörper (40) an der Befestigungsoberfläche (12) des Vlieskörpers (10) angeordnet ist; oder
d. aus dem Vlieskörper (10), einem Schaumkörper (40) und einer Klettadaptionsschicht (18) besteht, wobei der Schaumkörper (40) an der Befestigungsoberfläche (12) des Vlieskörpers (10) angeordnet ist und die Klettadaptionsschicht auf einer Oberfläche des Schaumkörpers (40) angeordnet ist, welche derjenigen Oberfläche des Schaumkörpers (40) entgegengesetzt ist, an welcher der Vlieskörper (10) angeordnet ist; oder
e. aus dem Vlieskörper (10), einem Schaumkörper (40) und einem zweiten Vlieskörper (50) besteht, wobei der Schaumkörper (40) an der Befestigungsoberfläche (12) des Vlieskörpers (10) angeordnet ist und der zweite Vlieskörper (50) auf einer Oberfläche des Schaumkörpers (40) angeordnet ist, welche derjenigen Oberfläche des Schaumkörpers (40) entgegengesetzt ist, an welcher der Vlieskörper (10) angeordnet ist.

6. Schleif- und Reinigungsvlies gemäß Anspruch 5 wobei, wenn dieser aus dem Vlieskörper (10), dem Schaumkörper (40) und dem zweiten Vlieskörper (50) besteht, der zweite Vlieskörper (50) ein Reinigungsvermögen aufweist, welches von dem Reinigungsvermögen des Vlieskörpers (10) verschieden ist.

7. Schleif- und Reinigungsvlies gemäß einem der vorherigen Ansprüche, wobei die genoppte Bearbeitungsoberfläche (10) des Schleif- und Reinigungsvlieses (1) Schleifpartikel aufweist, die mit einem Bindeharz, an der Bearbeitungsoberfläche (11) des Schleif- und Reinigungsvlieses (1) befestigt sind.

8. Schleif- und Reinigungsvlies gemäß einem der vorherigen Ansprüche, wobei die Noppen (14) eine Höhe von 25 % bis 75 %, bevorzugt von 40 % bis 60 % und am bevorzugtesten von 50 % der Gesamthöhe (G) des Vlieskörpers (10) aufweisen, wobei die Gesamthöhe (G) von der Befestigungsoberfläche (12) des Vlieskörpers (10) bis zum höchsten Punkt einer Noppe (14) gemessen wird.

9. Schleif- und Reinigungsvlies gemäß einem der vorherigen Ansprüche, wobei die Noppen (14) eine maximale Breite an ihrer Grundfläche von 3 mm bis 30 mm aufweisen, bevorzugt eine maximale Breite von 10 mm bis 15 mm.

10. Schleif- und Reinigungsvlies gemäß einem der vorherigen Ansprüche, wobei die Noppen (14) als Grundflächenformen Kreise und/oder Vielecke und/oder ellipsenartige Geometrien aufweisen.

11. Schleif- und Reinigungsvlies gemäß einem der vorherigen Ansprüche, wobei der Vlieskörper (10) ein Flächengewicht von 120 g/m² bis 2.000 g/m², bevorzugt ein Flächengewicht von 500 g/m² bis 1.600 g/m² aufweist;
und/oder wobei das Schleif- und Reinigungsvlies (1) aus Fasern auf Polyester- oder Polyamid-Basis besteht, die eine Stärke von 1 - 400 dtex, bevorzugt von 27 - 60 dtex aufweisen;
und/oder wobei der Vlieskörper (10) eine Gesamthöhe (G) von 4 mm - 30 mm, bevorzugt eine Gesamthöhe (G) von 8 mm - 20 mm und bevorzugter eine Gesamthöhe (G) von 10 mm - 15 mm aufweist.

12. Schleif- und Reinigungsvlies gemäß einem der vorherigen Ansprüche, wobei der Vlieskörper (10) eine runde Scheibenform mit einem Durchmesser von 200 mm - 800 mm oder einen Rechteckzuschnitt von 115 mm - 230 mm Breite und 200 mm - 500 mm Länge aufweist.

13. Verfahren zur Herstellung eines Schleif- und Reinigungsvlieses (1) zum maschinellen Schleifen und maschinellen Reinigen von strukturierten Oberflächen, aufweisend eine genoppte Bearbeitungsoberfläche (11), wobei das Verfahren die nachfolgenden Schritte aufweist:
a. Einlegen einer Vliesbahn (30) oder eines Vlieskörpers (10) in eine Presse (20), wobei eine erste Platte (22) der Presse (20) eben ist und eine Gegenplatte (24) der Presse (20) ein Lochblech (24) aufweist;
b. Zusammenfahren der Platten (22, 24) der Presse mit einem Druck (D) von 50 bar bis 200 bar und einer Temperatur von 50 °C bis 200 °C;
c. Halten des Druckes (D); und
d. Entnehmen der Vliesbahn (30) oder des Vlieskörpers (10), aufweisend eine genoppte Bearbeitungsoberfläche (11).

14. Verfahren zur Herstellung eines Schleif- und Reinigungsvlieses gemäß Anspruch 13, weiterhin aufweisend die Schritte:
f. vor dem Einlegen der Vliesbahn (30) oder eines Vlieskörpers (10) in die Presse (20), Aufbringen eines Bindeharzes auf den Vlieskörper (10) oder die Vliesbahn (30); und
g. Aufbringen von Schleifpartikeln auf das Bindeharz.

15. Verwendung eines Schleif- und Reinigungsvlieses (1) gemäß einem der Ansprüche 1 bis 12 zum maschinellen Schleifen und maschinellen Reinigen von strukturierten Bodenbelägen mit einer Scheiben-Bodenreinigungsmaschine.
